# EUROPÄISCHE PATENTSCHRIFT

(11) **EP 3 352 924 B1**
(45) Veröffentlichungstag und Bekanntmachung des Hinweises auf die Patenterteilung: **28.08.2019**
(21) Anmeldenummer: 16767302.9
(22) Anmeldetag: 21.09.2016
(51) Int. Cl.: B21D 5/02, B21D 37/14

(54) **BIEGEWERKZEUG-TRANSFERSHUTTLE**
BENDING TOOL TRANSFER SHUTTLE
NAVETTE DE TRANSFERT D'OUTIL DE PLIAGE

(30) Priorität: 21.09.2015 AT 508062015
(43) Veröffentlichungstag der Anmeldung: 01.08.2018
(73) Patentinhaber: TRUMPF Maschinen Austria GmbH & Co. KG., 4061 Pasching (AT)
(72) Erfinder: CAVICCHIA, Luigi, 10028 Trofarello (IT); TONDA ROCH, Andrea, 10141 Torino (IT); VERONESE, Roberto, 10023 Chieri (IT); VIDOTTO, Giovanni, 10023 Chieri (IT)
(74) Vertreter: Burger, Hannes
(86) Internationale Anmeldenummer: PCT/EP2016/072359
(87) Internationale Veröffentlichungsnummer: WO 2017/050797

(56) Entgegenhaltungen:
- EP-A1- 1 658 908
- WO-A1-2015/077810
- AT-A4- 509 980
- FR-A1- 2 266 592

## Beschreibung

Die Erfindung betrifft ein Biegewerkzeug-Transfershuttle zum Verschieben von Biegewerkzeugen in einer Führungsschiene, umfassend einen Grundkörper und eine betätigbare Kupplung zum Ankoppeln eines Biegewerkzeuges an das Transfershuttle. Die Erfindung betrifft auch eine Biegepresse, eine Beschickungsvorrichtung für eine Biegepresse und ein Verfahren zum Verschieben eines Biegewerkzeuges entlang einer Führungsschiene.

Die AT509980B1 offenbart eine Biegepresse mit einem Werkzeugspeicher, die Führungsanordnungen aus Linearschienen umfassen, die in fluchtender Ausrichtung stehen. Biegewerkzeuge können so entlang der Führungsschienen in die Biegepresse bewegt werden.

Beim Verschieben eines Biegewerkzeuges entlang einer Führungsschiene können folgende Komplikationen auftreten. Beim Ankoppeln und anschließenden Wegbewegen eines (ersten) Biegewerkzeuges mittels Transfershuttle, kann ein unmittelbar benachbartes (zweites) Biegewerkzeug, das vorerst an seiner Position bleiben soll, durch das an das Transfershuttle angekoppelte Biegewerkzeug 'mitgezogen' werden. Das Anhaften kann dazu führen, dass das 'mitgezogene' (zweite) Biegewerkzeug umkippt oder eine gewisse Wegstrecke mitmacht und dann ,stehen bleibt' oder sich überhaupt nicht von dem ersten Biegewerkzeug löst. Dieser Effekt kann zur Beschädigung des Werkzeuges oder zu einer Fehlpositionierung führen. Letzteres hat wiederum negative Auswirkungen auf das zu formende Werkstück. Hervorgerufen werden kann das Anhaften z.B. durch magnetische Anziehung zwischen den Biegewerkzeugen oder durch Vakuumeffekte aufgrund eines Ölfilmes zwischen den Biegewerkzeugen.

Die Erfindung setzt sich zum Ziel, diese Nachteile zu beseitigen und ein Transfershuttle bereitzustellen, mit dem zuverlässige Verschiebevorgänge erzielt werden können. Insbesondere soll das Separieren eines ersten Biegewerkzeuges von einem benachbarten zweiten Biegewerkzeug derart erfolgen, dass das zweite Biegewerkzeug an seiner Position bleibt und nicht vom ersten Biegewerkzeug mitgezogen wird.

Dieses Ziel wird mit einem eingangs genannten Biegewerkzeug-Transfershuttle dadurch erreicht, dass das Transfershuttle eine Halteeinrichtung zum temporären Halten von zumindest einem Biegewerkzeug in einer Führungsschiene aufweist und dass die Kupplung relativ zur Halteeinrichtung im Wesentlichen parallel zur Verfahrrichtung des Transfershuttles bewegbar ist.

Mit der Kupplung wird ein erstes Biegewerkzeug an das Transfershuttle angekoppelt. Mit der Halteeinrichtung wird ein neben dem ersten Biegewerkzeug angeordnetes zweites Biegewerkzeug gehalten, sodass es beim Wegziehen des ersten Biegewerkzeuges nicht mit bewegt wird. Während also das zweite Biegewerkzeug durch die Halteeinrichtung fixiert ist, bewegt sich die Kupplung samt angekoppeltem (erstem) Biegewerkzeug von dem zweiten Biegewerkzeug weg. Die Bewegungsrichtung der Kupplung relativ zur Halteeinrichtung entspricht der Verfahrrichtung des Transfershuttles.

Die Halteeinrichtung kann derart ausgebildet sein, dass sie in der haltenden Stellung neben dem zweiten Biegewerkzeug auch das erste Biegewerkzeug hält. In diesem Fall wird die durch die Halteeinrichtung ausgeübte Haltekraft durch die zur Bewegung der Kupplung in Verfahrrichtung aufgebrachte Kraft überwunden, sodass sich zwar das erste Biegewerkzeug, nicht aber das zweite Biegewerkzeug mitbewegt.

Kupplung und Halteeinrichtung sind an derselben Stirnseite des Transfershuttles angeordnet. Mit der Halteeinrichtung wird auf zuverlässige Weise gewährleistet, dass die Biegewerkzeuge voneinander getrennt werden und nicht aneinander haften bleiben. Sobald der Trennvorgang bewerkstelligt ist (bevorzugt wird ein Abstand von einigen mm, vorzugsweise etwa 5mm), wird die Fixierung durch die Halteeinrichtung nicht mehr benötigt. Die Halteeinrichtung kann wieder in die freigebende Stellung gebracht werden. Die Erfindung eignet sich insbesondere für kleine, d.h. schmale Werkzeuge mit geringer Standfläche.

Der Grundkörper des Transfershuttles weist einen Führungsabschnitt auf, durch den das Transfershuttle entlang bzw. in einer Führungsschiene in seiner Verfahrrichtung verfahrbar ist.

Die Verfahrrichtung des Transfershuttles ist durch den Führungsabschnitt bestimmt bzw. definiert. Der Führungsabschnitt kann Führungselemente, die ausgebildet sind, um in eine Führungsschiene zu ragen, und/oder Rollen, die dazu dienen, in oder neben der Führungsschiene anzuliegen, umfassen. Der Führungsabschnitt, insbesondere in die Führungsschiene ragende Führungselement(e) können auch dazu dienen, das Transfershuttle korrekt auszurichten, insbesondere zur Mittenebene der Biegepresse.

Das Transfershuttle kann in Form eines Schlittens oder Wagens oder sonstigen Gefährts ausgebildet sein. Das Transfershuttle ist mit seinem Führungsabschnitt in eine Führungsschiene einsetzbar und darin verfahrbar.

Eine bevorzugte Ausführungsform zeichnet sich dadurch aus, dass ein längliches, vorzugsweise flexibles Zug- und/oder Druckübertragungsmittel, insbesondere ein Band, ein Seil, eine Stange oder eine Kette, an dem Transfershuttle angebunden ist. Durch den Einsatz eines Zug- und/oder Druckübertragungsmittels kann der Verfahrantrieb des Transfershuttles fern der Werkzeughalterungen (der Biegepresse) angeordnet werden.

Die Kupplung kann z.B. als mechanische Kupplung, magnetische Kupplung oder als Ansaugvorrichtung ausgebildet sein. Die Kupplung kann eine kraftschlüssige und/oder formschlüssige Verbindung mit dem Biegewerkzeug herstellen. Die Stelleinrichtung zum Betätigen (Schließen bzw. Öffnen) der Kupplung kann eine Zylinder-Kolben-Einheit, einen Linearantrieb, einen Motor, eine Unterdruckeinrichtung und/oder eine elektromagnetische Einrichtung umfassen.

In einer alternativen Variante könnte das Transfershuttle auch selbstfahrend ausgebildet sein, wobei der Verfahrantrieb in oder an dem Shuttle angeordnet ist. Die Ansteuerung des Transfershuttles könnte drahtgebunden, aber auch per Funk erfolgen.

Eine bevorzugte Ausführungsform zeichnet sich dadurch aus, dass das Biege-werkzeug in der Führungsschiene durch dieselbe Führungsstruktur gehalten wird, durch den das Transfershuttle geführt ist. Dies ist besonders vorteilhaft, da für das Transfershuttle keine gesonderte Führungsstruktur vorgesehen werden muss.

Das Biegewerkzeug wird beispielsweise durch vom Schaft des Biegewerkzeuges abragende Haltemittel, wie z.B. Stifte, Pins oder Leisten gehalten. Die Haltemittel-ragen in die Führungsstruktur der Führungsschiene, wodurch das Biegewerkzeug in der Schiene gehalten wird. Die Haltemittel können auch beweglich sein und z.B. durch ein Betätigungselement des Biegewerkzeuges (sog. Sicherheitsstifte) von einer haltenden in eine freigebende Stellung bewegt werden. Dies ermöglicht das Einsetzen der Biegewerkzeuge in einer Richtung quer zur Längserstreckung der Schiene, was aber gemäß dem vorliegenden erfindungsgemäßen Prinzip beim Beschicken bzw. Wechseln nicht erforderlich ist.

Im Falle von Oberwerkzeugen (d.h. hängenden Biegewerkzeugen) kann eine Führungsstruktur in den Führungsschienen auch dazu ausgebildet sein, um das Transfershuttle in der Schiene zu halten. Die innerhalb der Schiene ausgebildete Führungsstruktur besitzt zusätzlich zur Führungsfunktion entlang der Längserstreckung der Schiene eine Haltefunktion, indem sie das Transfershuttle in (oder innerhalb) der Schiene hält. Das Transfershuttle ist entlang der Führungsstruktur (d.h. parallel zur Längserstreckung der Schiene) verschiebbar und in der Richtung senkrecht zur Längserstreckung der Schiene (d.h. in der Richtung vom Schieneninneren zur Schienenöffnung hin) durch die Führungsstruktur gehalten. Die Führungsstruktur verhindert somit, dass die Transfereinrichtung aus der Schiene fällt bzw. herausspringt.

Eine bevorzugte Ausführungsform zeichnet sich dadurch aus, dass die Kupplung relativ zum Grundkörper im Wesentlichen parallel zur Verfahrrichtung des Transfershuttles zwischen einer eingefahrenen Position und einer ausgefahrenen Position bewegbar ist. Die Kupplung dient hier nicht nur zum Ankoppeln, sondern auch zum Wegziehen des ersten Biegewerkzeuges, solange das zweite Biegewerkzeug durch die Halteeinrichtung fixiert wird.

In einer alternativen Variante könnte die Halteeinrichtung relativ zum Grundkörper im Wesentlichen parallel zur Verfahrrichtung des Transfershuttles zwischen einer eingefahrenen Position und einer ausgefahrenen Position bewegbar sein. Während des Fixierens des (zweiten) Biegewerkzeuges durch die Halteeinrichtung, würde sich der Grundkörper des Transfershuttle samt angekoppeltem (erstem) Biegewerkzeug vom zweiten Biegewerkzeug wegbewegen, wobei in dieser Phase die Halteeinrichtung durch eine Relativbewegung zwischen Halteeinrichtung und Grundkörper stationär zur Führungsschiene gehalten würde.

Eine bevorzugte Ausführungsform zeichnet sich dadurch aus, dass die Kupplung in eine Richtung, vorzugsweise in Richtung der ausgefahrenen Position, vorgespannt ist, wodurch auch ein Antrieb, der in nur eine Richtung wirkt, verwendet werden kann.

Eine bevorzugte Ausführungsform zeichnet sich dadurch aus, dass die Kupplung durch eine im Transfershuttle integrierte Antriebseinrichtung in eine Verfahrrichtung des Transfershuttles bewegbar ist. Durch die Integration der Antriebsfunktionalität im Transfershuttle wird - unabhängig von der Position des Transfershuttles entlang einer Führungsschiene - ein zuverlässiger Trennvorgang gewährleistet.

Eine bevorzugte Ausführungsform zeichnet sich dadurch aus, dass die Kupplung eine mechanische Kupplung ist und durch eine im Transfershuttle integrierte erste Stelleinrichtung zwischen einer Offen-Stellung und einer Schließ-Stellung betätigbar ist. Neben der Integration der Stellfunktion in dem Transfershuttle gewährleistet diese Ausführungsform durch die mechanische Kupplung eine zuverlässige und reproduzierbare Anbindung. Die Kupplung ist vorzugsweise eine kraftschlüssige Kupplung.

Bevorzugt wird, wenn die erste Stelleinrichtung zusammen mit der Kupplung relativ zum Grundkörper im Wesentlichen parallel zur Verfahrrichtung des Transfershuttles bewegbar ist.

Eine bevorzugte Ausführungsform zeichnet sich dadurch aus, dass die Antriebseinrichtung der Kupplung einen ersten Antriebszylinder umfasst und die Stelleinrichtung der Kupplung einen zweiten Antriebszylinder umfasst, wobei der zweite Antriebszylinder innerhalb des ersten Antriebszylinders bewegbar (bzw. gleitend) gelagert ist. Damit wird eine kompakte und platzsparende Bauweise erreicht. Vorzugsweise sind der erste Antriebszylinder und der zweite Antriebszylinder konzentrisch zueinander angeordnet.

Eine bevorzugte Ausführungsform zeichnet sich dadurch aus, dass die Halteinrichtung eine mechanische Halteeinrichtung ist und durch eine im Transfershuttle integrierte zweite Stelleinrichtung zwischen einer haltenden Stellung und einer freigebenden Stellung betätigbar ist, wobei vorzugsweise die Halteeinrichtung ausgebildet ist, um ein Biegewerkzeug gegen die Führungsschiene zu drücken. Durch eine mechanische Halteeinrichtung wird eine zuverlässige Fixierung erreicht. Die Halteinrichtung kann ausgebildet sein, um das Biegewerkzeug niederzuhalten, zu klemmen, zu greifen oder zu stoppen. Die Halteeinrichtung könnte somit auch als Anschlag ausgebildet sein, der sich dem zweiten Biegewerkzeug ,in den Weg stellt'.

In einer alternativen Ausführungsform kann die Halteeinrichtung ausgebildet sein, um seitlich gegen das/die Biegewerkzeug(e) zu drücken, wodurch der Werkzeugschaft gegen die Führungsschiene (bzw. die Wand der Führungsschiene) gedrückt wird.

Eine bevorzugte Ausführungsform zeichnet sich dadurch aus, dass die Halteinrichtung zumindest ein Halteelement mit einer Biegewerkzeugkontaktfläche umfasst, wobei das Halteelement relativ zum Grundkörper quer, vorzugsweise senkrecht zur Verfahrrichtung des Transfershuttles bewegbar ist. Das Halteelement kann in Form eines vom Grundkörper abragenden Armes gebildet sein.

Eine bevorzugte Ausführungsform zeichnet sich dadurch aus, dass die Biegewerkzeugkontaktfläche des Halteelementes aus nachgiebigem, insbesondere elastischem Material, vorzugsweise aus Gummi und/oder als Bürste, vorzugsweise aus Kunststoffborsten, gebildet ist. Dadurch können einerseits Beschädigungen verhindert, andererseits bauliche Toleranzen benachbarter Biegewerkzeuge ausgeglichen werden. Außerdem kann eine gleichmäßige Druckverteilung auf die Werkzeuge erreicht werden.

Eine bevorzugte Ausführungsform zeichnet sich dadurch aus, dass die Halteeinrichtung in Verfahrrichtung des Transfershuttles über die Kupplung hinausragt. Durch diese Maßnahme wird erreicht, dass (ein) Biegewerkzeug(e), das/die hinter dem ersten Biegewerkzeug angeordnet ist/sind, durch die Halteeinrichtung erreicht werden.

Eine bevorzugte Ausführungsform zeichnet sich dadurch aus, dass die Kupplung unabhängig von der Halteeinrichtung bewegbar ist. Dies ist besonders vorteilhaft, da ja zumindest ein Biegewerkzeug stationär (zur Führungsschiene) gehalten werden soll, während das angekoppelte Biegewerkzeug wegbewegt werden soll.

Eine bevorzugte Ausführungsform zeichnet sich dadurch aus, dass die Kupplung durch gegenüberliegende und aufeinander zu bewegbare Greifbacken gebildet wird. Die Richtung der Greifbewegung erstreckt sich vorzugsweise quer zur Verfahrrichtung des Transfershuttles (und damit quer zur Führungsschiene).

Eine bevorzugte Ausführungsform zeichnet sich dadurch aus, dass zumindest eine Greifbacke an ihrer der gegenüberliegenden Greifbacke zugewandten Seite stufenförmig ausgebildet ist. Dadurch können unterschiedliche Biegewerkzeuggrößen bedient werden.

Eine bevorzugte Ausführungsform zeichnet sich dadurch aus, dass die Kupplung zumindest einen, vorzugsweise asymmetrischen, Adapter-Aufsatz umfasst, der auf einem Greifbacken aufgesetzt ist. Mit solchen Aufsätzen können auch breitere, asymmetrische oder SpezialWerkzeuge verschoben werden.

Eine bevorzugte Ausführungsform zeichnet sich dadurch aus, dass das Biegewerkzeug-Transfershuttle zumindest einen Energiespeicher, insbesondere einen Druckspeicher, umfasst, der mit der Antriebseinrichtung der Kupplung und/oder der Stelleinrichtung der Kupplung und/oder der Stelleinrichtung der Halteeinrichtung verbunden ist, wobei vorzugsweise das Transfershuttle zumindest eine mit dem Energiespeicher verbundene Energieversorgungsschnittstelle aufweist. Das Transfershuttle ist somit weitgehend autark und kann eine Reihe von Verschiebevorgängen durchführen, ohne einer ständigen externen Energieversorgung zu bedürfen. Ein Energiespeicher kann auch ein elektrischer Energiespeicher sein, z.B. eine Batterie oder ein Super-Cap.

Im Falle eines Druckspeichers kann zwischen dem Druckspeicher und den Antriebszylindern eine Einrichtung zur Druckreduzierung vorgesehen sein. So könnte der Druckspeicher für einen Druck von 10-12 bar ausgelegt sein, während die Antriebszylinder mit z.B. 4 bar betrieben werden.

Eine bevorzugte Ausführungsform zeichnet sich dadurch aus, dass das Transfershuttle eine Steuereinrichtung zur Betätigung der Kupplung und der Halteeinrichtung umfasst, wobei vorzugsweise die Steuereinrichtung zum Empfangen von Steuerbefehlen mit einer Drahtlos-Schnittstelle verbunden ist.

Das Ziel wird auch erreicht mit einer Biegepresse und/oder Beschickungsvorrichtung zum Beschicken einer Biegepresse mit Biegewerkzeugen und/oder zum Auswechseln von einem oder mehreren in einer Biegepresse eingesetzten Biegewerkzeugen, umfassend zumindest eine als Führungsschiene ausgebildete Biegewerkzeughalterung und ein in der Führungsschiene verfahrbares Biegewerkzeug-Transfershuttle gemäß vorliegender Erfindung.

Eine bevorzugte Ausführungsform ist gekennzeichnet durch eine Ladestation, die im Bereich einer Führungsschiene angeordnet ist und zumindest eine an das Transfershuttle ankoppelbare Energieversorgungsschnittstelle, insbesondere eine Druckluft-Schnittstelle und/oder eine elektrische und/oder induktive Schnittstelle, aufweist. Das Wiederaufladen des Transfershuttles kann automatisch erfolgen, insbesondere wenn die Ladestation eine definierte Parkposition des Transfershuttles bildet und die jeweiligen Energieversorgungsschnittstellen dann übereinander zu liegen kommen.

Die Energieversorgungsschnittstelle(n) am Transfershuttle können mit den Energieversorgungsschnittstelle(n) an der Ladestation einen Schnelldichtverschluss (plug-in) bilden.

An dieser Stelle sei erwähnt, dass die Antriebs- und Stelleinrichtungen des Transfershuttles - anstelle der im folgenden beschriebenen Druckluftbetätigung - selbstverständlich auch hydraulisch, elektrisch, magnetisch oder durch Unterdruck betrieben werden könnten. Die Einrichtungen zum Betätigen (Schließen bzw. Öffnen sowie Halten bzw. Freigeben) und zum Bewegen (eingefahrene Position bzw. ausgefahrene Position der Kupplung) könnten jeweils z.B. eine Zylinder-Kolben-Einheit, einen Linearantrieb, einen Motor, eine Unterdruckeinrichtung und/oder eine elektromagnetische Einrichtung umfassen.

Das Ziel wird auch erreicht mit einem Verfahren zum Verschieben eines Biegewerkzeuges entlang einer Führungsschiene mit einer erfindungsgemäßen Biegewerkzeug-Transfershuttle, umfassend die Schritte:
(a) Heranfahren des Transfershuttles an zumindest ein Biegewerkzeug,
(b) Ankoppeln des Biegewerkzeuges an das Transfershuttle durch Betätigung der Kupplung,
(c) Betätigen der Halteeinrichtung in die haltende Stellung,
(d) Bewegen der Kupplung relativ zur Halteeinrichtung im Wesentlichen parallel zur Verfahrrichtung des Transfershuttles, während sich die Halteeinrichtung in haltender Stellung befindet,
(e) Betätigen der Halteeinrichtung in die freigebende Stellung,
(f) Verfahren des Transfershuttles mit dem angekoppelten Biegewerkzeug.

An dieser Stelle sei angemerkt, dass die Schritte (b) und (c) auch zeitlich umgekehrt sein können, also zuerst Schritt (c) und dann Schritt (b).

Eine bevorzugte Ausführungsform zeichnet sich dadurch aus, dass
- in Schritt (a) das Transfershuttle an eine Reihe aus zumindest zwei in der Führungsschiene hintereinander angeordneten Biegewerkzeugen herangefahren wird,
- in Schritt (b) das erste Biegewerkzeug der Reihe an das Transfershuttle angekoppelt wird,
- in Schritt (c) ein hinter dem ersten Biegewerkzeug der Reihe befindliches Biegewerkzeug durch die Halteeinrichtung fixiert wird, und
- in Schritt (e) durch Bewegen der Kupplung relativ zur Halteeinrichtung das erste Biegewerkzeug der Reihe von dem hinter dem ersten Biegewerkzeug der Reihe befindlichen Biegewerkzeug separiert wird.

Zum besseren Verständnis der Erfindung wird diese anhand der nachfolgenden Figuren näher erläutert.

Es zeigen jeweils in stark vereinfachter, schematischer Darstellung:
- Fig. 1 bis 4: Probleme beim Trennen von Biegewerkzeugen durch eine Transfereinrichtung gemäß Stand der Technik;
- Fig. 5: ein erfindungsgemäßes Transfershuttle beim Heranfahren an eine Reihe von Biegewerkzeugen;
- Fig. 6: das Transfershuttle aus Fig. 1 in angekoppelter Stellung;
- Fig. 7: das Transfershuttle beim Trennvorgang;
- Fig. 8: das Transfershuttle beim Verschieben des Biegewerkzeuges;
- Fig. 9: die Antriebseinrichtung und Stelleinrichtung der Kupplung;
- Fig. 10: eine Ausführungsform mit Adapter-Aufsatz für die Kupplung;
- Fig. 11: eine Biegepresse und Beschickungseinrichtung in schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten des Biegewerkzeug-Transfershuttles, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Erfindung diese bzw. deren Bestandteile teilweise unmaßstäblich und/oder vergrößert und/oder verkleinert dargestellt wurden.

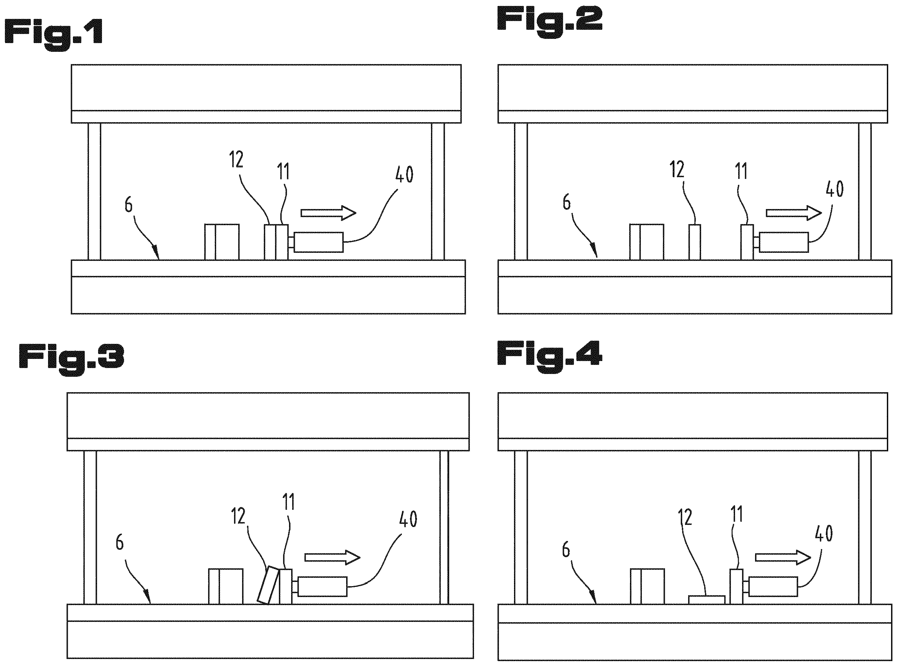

Die Fig. 1 bis 4 zeigen die Problematik beim Verschieben eines Biegewerkzeuges gemäß Stand der Technik. Ziel ist es, ein erstes Biegewerkzeug 11 aus einer Reihe von Biegewerkzeugen 11, 12 zu separieren und wegzubewegen. Eine Transfereinrichtung 40 koppelt an das erste Biegewerkzeug 11 der Reihe an und zieht es anschließend in die entgegengesetzte Richtung weg.

In der (nicht dargestellten) Startkonfiguration sind alle vier Biegewerkzeuge unmittelbar nebeneinander angeordnet. Bis zu der in Fig. 1 gezeigten Situation bleibt das benachbarte (zweite) Biegewerkzeug 12 an dem ersten Biegewerkzeug 11 haften. Es wurde eine gewisse Wegstrecke mitgezogen, bevor es - nun an falscher Position (Fig. 2) - stehen bleibt.

In der in den Fig. 3 und 4 gezeigten Situation führt ein teilweises Anhaften des zweiten Biegewerkzeuges 12 am ersten Biegewerkzeug 11 zum Umkippen (Fig. 4), wodurch Schäden am Werkzeug auftreten können.

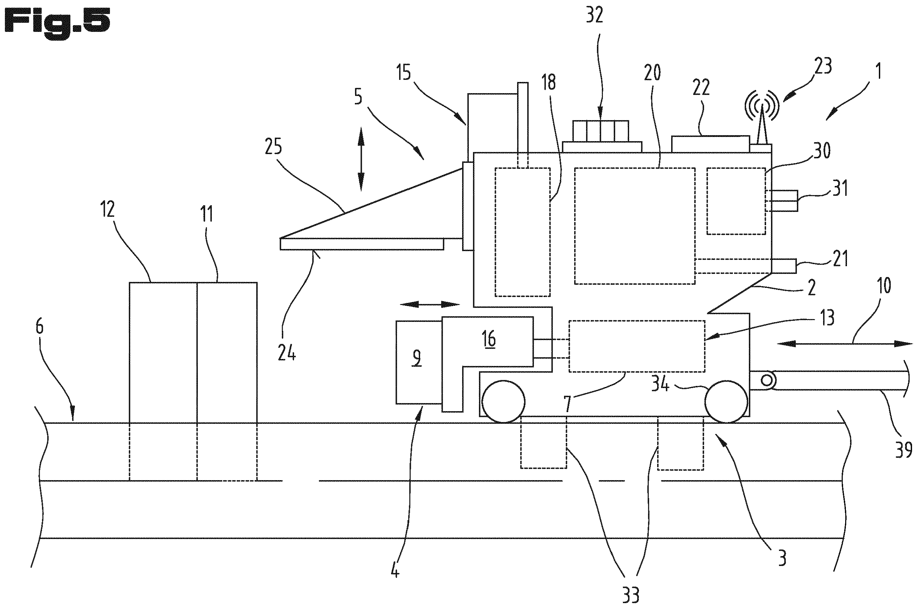

Fig. 5 zeigt ein erfindungsgemäßes Biegewerkzeug-Transfershuttle 1, das in derselben Führungsschiene 6 geführt ist wie ein zu verschiebendes Biegewerkzeug 11. In Fig. 5 bewegt sich das Transfershuttle 1 in seiner Verfahrrichtung 10 auf eine Reihe aus Biegewerkzeugen 11, 12 zu.

Das Transfershuttle 1 umfasst einen Grundkörper 2 mit einem Führungsabschnitt 3, der mit der Führungsschiene 6 zusammenwirkt und durch den das Transfershuttle 1 in einer Verfahrrichtung 10 entlang der Führungsschiene 6 verfahrbar ist. Der Führungsabschnitt umfasst in der dargestellten Ausführungsform Führungselemente 33, die in die Führungsschiene 6 ragen, und Rollen 34, die auf der Führungsschiene 6 aufliegen. Ein längliches Zug- und/oder Druckübertragungselement 39, das an dem Transfershuttle 1 angebunden ist und mit einem (nicht dargestellten) Antrieb zusammenwirkt, überträgt die Verfahrbewegung auf das Transfershuttle 1.

An einer Stirnseite des Grundkörpers 2 befindet sich eine betätigbare Kupplung 4 zum Ankoppeln eines Biegewerkzeuges 11 an das Transfershuttle 1. An derselben Stirnseite des Grundkörpers 2 weist das Transfershuttle 1 eine Halteeinrichtung 5 zum temporären Halten von zumindest einem Biegewerkzeug 12 in der Führungsschiene 6 auf. Die Kupplung 4 ist unabhängig von der Halteeinrichtung 5 bewegbar.

Die Kupplung 4 ist relativ zur Halteeinrichtung 5 im Wesentlichen parallel zur Verfahrrichtung 10 des Transfershuttles 1 bewegbar (angedeutet durch den Doppelpfeil). In der dargestellten Ausführungsform wird die Kupplung 4 durch eine Plattform 16 und durch gegenüberliegende und aufeinander zu bewegbare Greifbacken 9, die an der Plattform 16 gelagert und relativ zur Plattform 16 die Schließ- bzw. Öffnungsbewegung ausführen, gebildet.

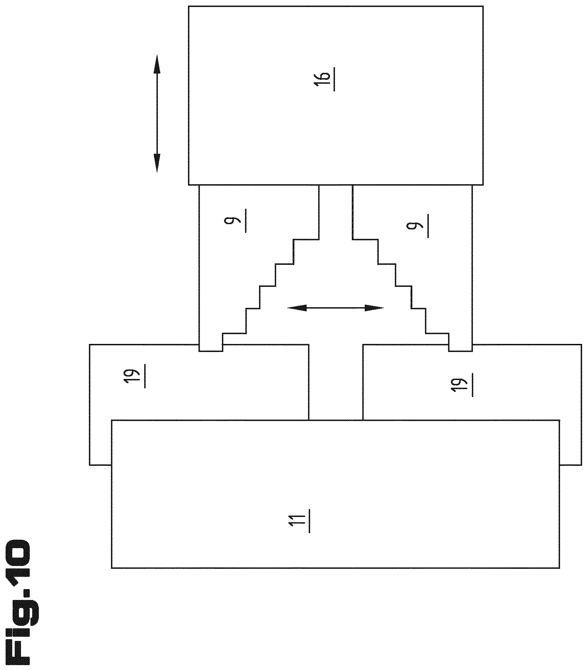

Die Greifbacken 9 sind jeweils an ihrer der gegenüberliegenden Greifbacke zugewandten Seite stufenförmig ausgebildet, wodurch bei gleichem Stellweg unterschiedliche Werkzeugbreiten handhabbar sind. Die Kupplung 4 kann auch Adapter-Aufsätze 19 umfassen, die auf die Greifbacken 9 aufgesetzt werden (Fig. 10).

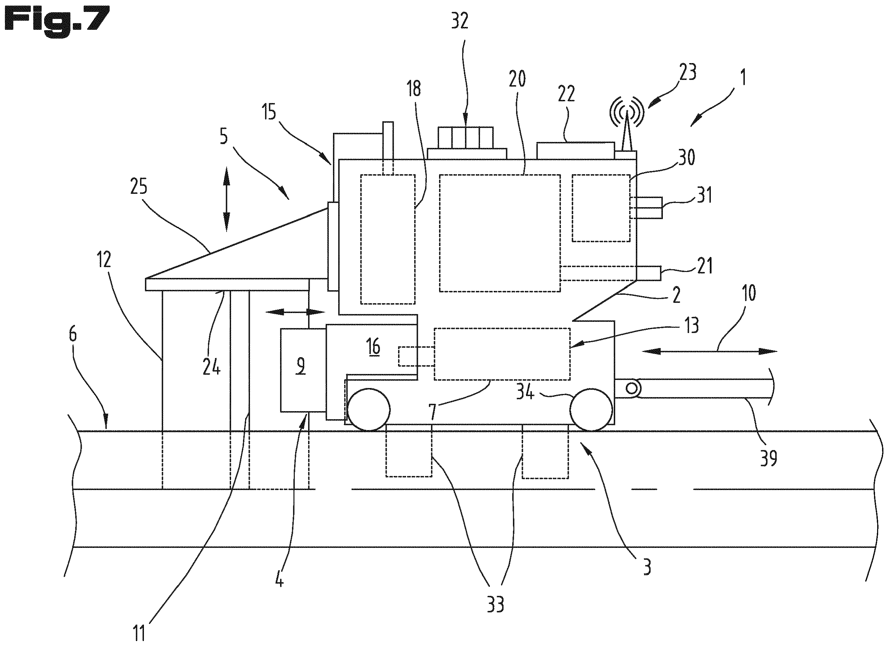

In der dargestellten Ausführungsform ist die Kupplung 4 relativ zum Grundkörper 2 - im Wesentlichen parallel zur Verfahrrichtung 10 des Transfershuttles 1 - zwischen einer eingefahrenen Position (Fig. 7) und einer ausgefahrenen Position (Fig. 5) bewegbar ist. Dabei kann die Kupplung 4 in eine Richtung, vorzugsweise in Richtung der ausgefahrenen Position (Fig. 5), vorgespannt sein. Die Kupplung 4 ist durch eine im Transfershuttle 1 integrierte Antriebseinrichtung 13 in Verfahrrichtung 10 des Transfershuttles 1 (hier: in Richtung eingefahrene Position) bewegbar. Die Antriebseinrichtung 13 umfasst einen (ersten) Antriebszylinder 7, der in Fig. 19 näher dargestellt ist.

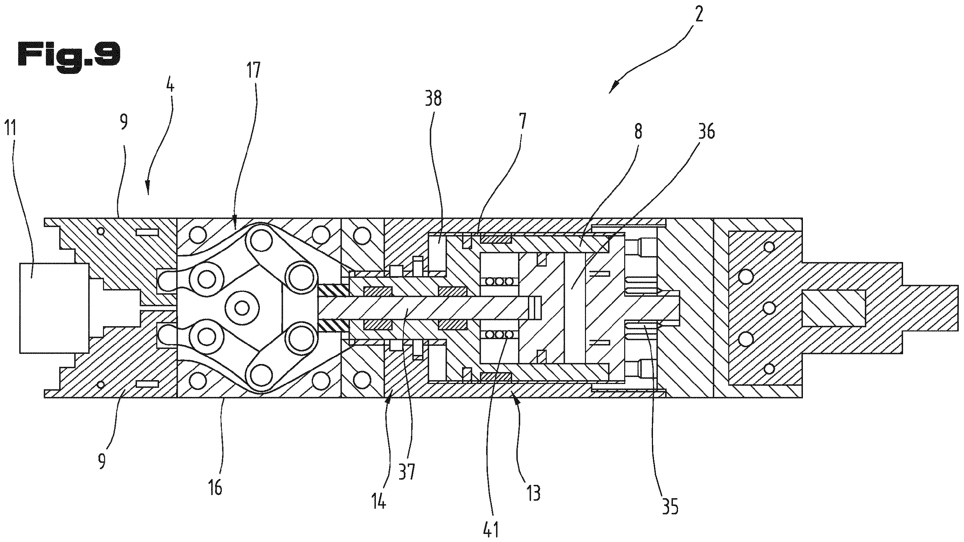

Fig. 9 zeigt auch die im Transfershuttle 1 integrierte Stelleinrichtung 14, mit der die mechanische Kupplung 4 zwischen einer Offen-Stellung und einer Schließ-Stellung betätigbar ist. Die Stelleinrichtung 14 umfasst einen (zweiten) Antriebszylinder 8, dessen Kolbenstange 37 mit einem Hebelmechanismus 17 angebunden ist. Der Hebelmechanismus 17 ist auf der durch den Antriebsmechanismus 13 bewegbaren Plattform 16 der Kupplung 4 gelagert und wirkt mit den Greifbacken 9 zusammen.

In der dargestellten Ausführungsform sind die Antriebseinrichtung 13 und die Stelleinrichtung 14 ineinander ,verschachtelt': Der zweite Antriebszylinder 8, der funktionell zur Stelleinrichtung 14 gehört, gleitet innerhalb des ersten Antriebszylinders 7, der funktionell zur Antriebseinrichtung 13 gehört. Mit anderen Worten: der zweite Antriebszylinder 8 bildet den Kolben des ersten Antriebszylinders 7. Wenn die Kammer 38 des ersten Antriebszylinders 7 (z.B. mit Druckluft) beaufschlagt wird, bewegt sich der zweite Antriebszylinder 8 und mit ihm die Plattform 16 samt Greifbacken 9 in die eingefahrene Stellung (in Fig. 9 nach rechts). Mit einer Feder 35 ist der zweite Antriebszylinder 8 in die ausgefahrene Position (in Fig. 9 nach links) vorgespannt, sodass sich die Kupplung 4 in die ausgefahrene Position bewegt, sobald die Kammer 38 entspannt wird.

Wenn die Kammer 36 des zweiten Antriebszylinders 8 beaufschlagt wird, bewegt sich die Kolbenstange 37 in Richtung Greifbacken 9 und bewirkt über den Hebelmechanismus 17 eine Schließbewegung der Greifbacken 9. Auch hier sorgt eine Feder 41 für eine Rückstellbewegung, d.h. die Kupplung 4 ist in die geöffnete Stellung vorgespannt.

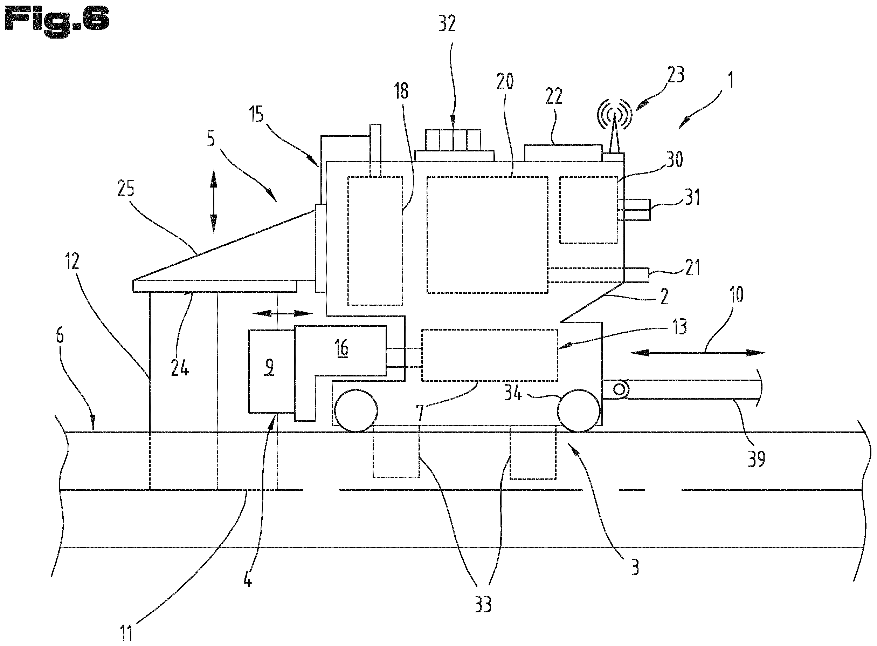

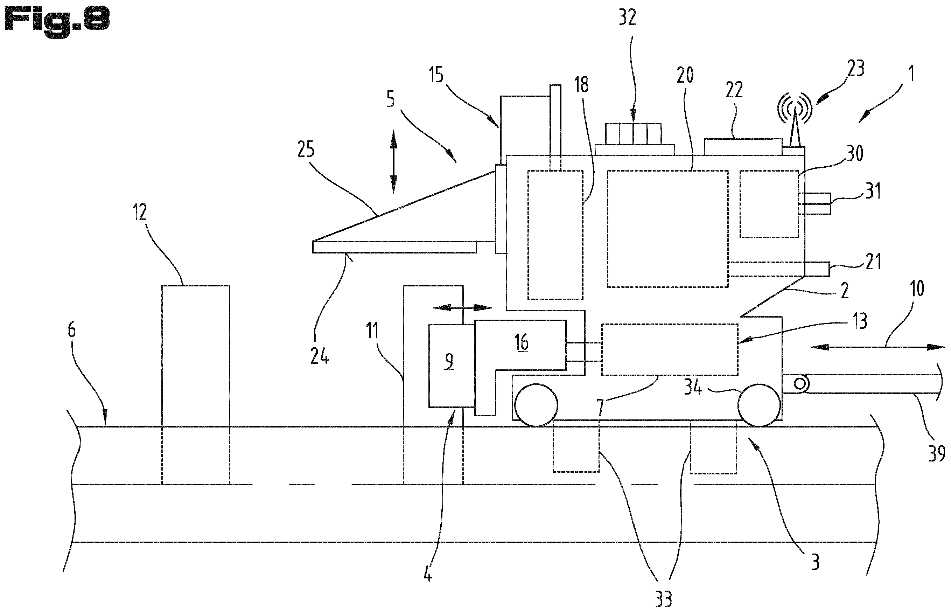

Im Folgenden wird die Halteeinrichtung 5 näher beschrieben. Die - in der vorliegenden Ausführungsform - mechanische Halteeinrichtung ist durch eine im Transfershuttle 1 integrierte zweite Stelleinrichtung 15 zwischen einer haltenden Stellung (Fig. 6, 7) und einer freigebenden Stellung (Fig. 5, 8) betätigbar. In der haltenden Stellung drückt sie das/die Biegewerkzeuge gegen die Führungsschiene 6. Die Stelleinrichtung 15 umfasst einen dritten Antriebszylinder 18.

Die Halteinrichtung 5 umfasst ein Halteelement 25 mit einer Biegewerkzeugkontaktfläche 24. Das Halteelement 25 ist relativ zum Grundkörper 2 quer (hier: senkrecht) zur Verfahrrichtung 10 des Transfershuttles 1 bewegbar. Die Biegewerkzeugkontaktfläche 24 des Halteelementes 25 ist vorzugsweise aus nachgiebigem, insbesondere elastischem Material, vorzugsweise aus Gummi und/oder als Bürste, vorzugsweise aus Kunststoffborsten, gebildet. Die Halteeinrichtung 5 ragt in Verfahrrichtung 10 des Transfershuttles 1 über die Kupplung 4 hinaus.

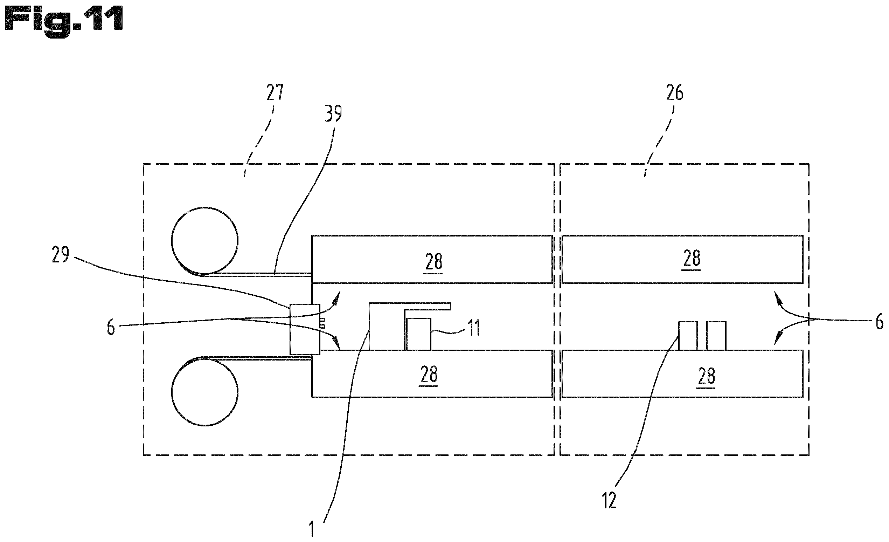

Das Transfershuttle 1 umfasst einen Energiespeicher 20 in Form eines Druckluft-Speichers und einen elektrischen Energiespeicher 30 (z.B. Batterie). Die Antriebszylinder 7, 8 und 18 sind über eine Ventilanordnung 32 mit dem Druckluftspeicher 20 verbunden und werden durch diesen beaufschlagt. Die Druckluftleitungen sind der Übersichtlichkeit halber nicht dargestellt. Elektrische Verbraucher, wie z.B. die Steuereinrichtung 22 werden über den elektrischen Energiespeicher mit Energie versorgt. An dem Transfershuttle 1 sind auch mit den jeweiligen Energiespeichern 20, 30 verbundene Energieversorgungsschnittstellen 21, 31 ausgebildet. In einer Ladestation 29 (Fig. 11) können die Energiespeicher 20, 30 über entsprechende Schnittstellen aufgeladen werden.

Das Transfershuttle 1 umfasst auch eine Steuereinrichtung 22 zur Betätigung der Kupplung 4 und der Halteeinrichtung 5. In der dargestellten Ausführungsform ist Steuereinrichtung 22 zum Empfangen von Steuerbefehlen mit einer Drahtlos-Schnittstelle 23 verbunden.

Im Folgenden wird anhand der Fig. 5 bis 8 das erfindungsgemäße Verfahren zum Verschieben eines Biegewerkzeuges näher beschrieben:
In einem Schritt (a) wird das Transfershuttle 1 an eine Reihe aus Biegewerkzeugen 11, 12 herangefahren (Fig. 5). Die Kupplung 4 befindet sich in der Offen-Stellung und in der ausgefahrenen Position.

Sobald die Biegewerkzeuge erreicht sind, erfolgt in einem Schritt (b) das Ankoppeln des ersten Biegewerkzeuges 11 der Reihe an das Transfershuttle 1 durch Betätigung der Kupplung 4 in die Schließ-Stellung.

Vor oder nach dem Schließen der Kupplung 4 wird in einem Schritt (c) die Halteeinrichtung 5 in die haltende Stellung gebracht, sodass (auch) das hinter dem ersten Biegewerkzeug 11 befindliche zweite Biegewerkzeug 12 (niedergehalten bzw. fixiert wird (Fig. 6).

Nun wird in einem Schritt (d) - bei fixiertem Biegewerkzeug 12 - die Kupplung 4 samt erstem Biegewerkzeug 11 relativ zur Halteeinrichtung 5, parallel zur Verfahrrichtung 10 des Transfershuttles 1, von dem zweiten Biegewerkzeug 12 wegbewegt (Fig. 7). Zur Trennung der beiden Biegewerkzeuge reichen dabei einige mm. In der dargestellten Ausführungsform wird auch das erste Biegewerkzeug 11 der Haltekraft der Halteeinrichtung 5 ausgesetzt. Die dadurch bewirkte Reibungskraft ist jedoch (wesentlich) geringer als die Kraft, die durch den Antriebszylinder 7 über die Kupplung 4 auf das Biegewerkzeug 11 ausgeübt wird, sodass das erste Biegewerkzeug 11 unter dem Halteelement 25 durchgleitet.

Nach dem Separiervorgang wird in einem Schritt (e) die Halteeinrichtung 5 in die freigebende Stellung gebracht und in einem Schritt (f) das Transfershuttle 1 mit dem angekoppelten Biegewerkzeug 11 verfahren (Fig. 8), wobei hier die Kupplung wieder in der ausgefahrenen Position sein kann.

An dieser Stelle sei erwähnt, dass anstelle oder zusätzlich zur Bewegbarkeit der Kupplung 4 relativ zum Grundkörper 2 (und parallel zur Verfahrrichtung 10) die Halteeinrichtung 5 relativ zum Grundkörper (und parallel zur Verfahrrichtung 10) bewegbar ausgebildet sein könnte. In Schritt (d) könnte sich dann die Kupplung 4 samt Grundkörper 2 relativ zur Halteeinrichtung 5 bewegen. Die Relativbewegung zwischen Halteeinrichtung 5 und Grundkörper 2 erfolgt dann derart, dass die Halteeinrichtung 5 stationär bleibt, um das zweite Biegewerkzeug 12 zu fixieren.

Für eine bevorzugte Ausführungsform wird nachfolgend zusammengefasst, dass:
- in Schritt (a) das Transfershuttle 1 an eine Reihe aus zumindest zwei in der Führungsschiene 6 hintereinander angeordneten Biegewerkzeugen 11, 12 herangefahren wird,
- in Schritt (b) das erste Biegewerkzeug 11 der Reihe an das Transfershuttle 1 angekoppelt wird,
- in Schritt (c) ein hinter dem ersten Biegewerkzeug 11 der Reihe befindliches Biegewerkzeug 12 durch die Halteeinrichtung 5 fixiert wird, und
- in Schritt (e) durch Bewegen der Kupplung 4 relativ zur Halteeinrichtung 5 das erste Biegewerkzeug 11 der Reihe von dem hinter dem ersten Biegewerkzeug 11 der Reihe befindlichen Biegewerkzeug 12 separiert wird

Fig. 11 zeigt schließlich eine Biegepresse 26 und eine Beschickungsvorrichtung 27 zum Beschicken bzw. Auswechseln von Biegewerkzeugen 11, 12. Diese umfassend jeweils eine als Führungsschienen ausgebildete Biegewerkzeughalterungen 28 für Unterwerkzeuge und Oberwerkzeuge sowie zumindest ein in der Führungsschiene verfahrbares Biegewerkzeug-Transfershuttle 1 gemäß vorliegender Erfindung.

Zu sehen ist auch eine Ladestation 29, die im Bereich einer Führungsschiene 6 angeordnet ist und zumindest eine an das Transfershuttle 1 ankoppelbare Energieversorgungsschnittstelle, insbesondere eine Druckluft-Schnittstelle und/oder eine elektrische und/oder induktive Schnittstelle, aufweist. Beim Einfahren in die Ladestation werden die Energieversorgungsschnittstellen 21, 31 automatisch an entsprechende Schnittstellen der Ladestation 29 angekoppelt.

Es sei ausdrücklich darauf hingewiesen, dass die Erfindung, insbesondere das Transfershuttle, nicht nur in der unteren Führungsschiene (für Unterwerkzeuge) einsetzbar ist, sondern auch in der oberen Führungsschiene (für Oberwerkzeuge). So können Führungsstrukturen in der oberen Führungsschiene vorgesehen sein, die das Transfershuttle halten (d.h. ein Herabfallen verhindern).

Die Erfindung wurde anhand eines Beispiels beschrieben, bei dem das erste Biegewerkzeug 11 über die Kupplung 4 an dem Transfershuttle 1 angekoppelt bleibt, wenn es nach dem Trennvorgang (vom zweiten Biegewerkzeug 12) großräumig entlang der Führungsschiene 6 verschoben wird.

Die Erfindung kann jedoch auch dahingehend verwirklicht sein, dass die Kupplung dazu ausgebildet ist, temporär an das zweite Biegewerkzeug 12 anzukoppeln und das zweite Biegewerkzeug 12 vom ersten Biegewerkzeug 11 (geringfügig) wegzuschieben bzw. zu separieren. Während des Separiervorganges wird das erste Biegewerkzeug 11 von der Halteeinrichtung gehalten. Anschließend wird das erste Biegewerkzeug 11 von dem zweiten Biegewerkzeug 12 (großräumig) wegbewegt; dabei kann die Ankopplung des ersten Biegewerkzeuges 11 an das Transfershuttle 1 durch die Halteeinrichtung verwirklicht sein. Alternativ könnte die Kupplung nach dem Separiervorgang an das erste Biegewerkzeug 11 ankoppeln (umkoppeln).

Mit anderen Worten: Bei einer solchen Ausführungsform sind die Funktionen der Kupplung und der Halteeinrichtung - im Hinblick auf die dargestellten Ausführungsformen - teilweise vertauscht. Die übrigen Merkmale können aber auch bei dieser Ausführungsform verwirklicht sein.

**Bezugszeichenaufstellung**

| | | | |
|---|---|---|---|
| 1 | Biegewerkzeug-Transfershuttle | 31 | Energieversorgungsschnittstelle |
| 2 | Grundkörper | 32 | Ventilanordnung |
| 3 | Führungsabschnitt | 33 | Führungselement |
| 4 | Kupplung | 34 | Rolle |
| 5 | Halteeinrichtung | 35 | Feder |
| 6 | Führungsschiene | 36 | Kammer |
| 7 | erster Antriebszylinder | 37 | Kolbenstange |
| 8 | zweiter Antriebszylinder | 38 | Kammer |
| 9 | Greifbacke | 39 | Zug- und/oder Druckübertragungsmittel |
| 10 | Verfahrrichtung | | |
| 11 | Erstes Biegewerkzeug | 40 | Transfereinrichtung |
| 12 | Zweites Biegewerkzeug | 41 | Feder |
| 13 | Antriebseinrichtung | | |
| 14 | Erste Stelleinrichtung | | |
| 15 | Zweite Stelleinrichtung | | |
| 16 | Plattform | | |
| 17 | Hebelmechanismus | | |
| 18 | dritter Antriebszylinder | | |
| 19 | Adapter-Aufsatz | | |
| 20 | Energiespeicher | | |
| 21 | Energieversorgungsschnittstelle | | |
| 22 | Steuereinrichtung | | |
| 23 | Drahtlos-Schnittstelle | | |
| 24 | Biegewerkzeugkontaktfläche | | |
| 25 | Halteelement | | |
| 26 | Biegepresse | | |
| 27 | Beschickungsvorrichtung | | |
| 28 | Biegewerkzeughalterung | | |
| 29 | Ladestation | | |
| 30 | Energiespeicher | | |

## Patentansprüche

1. Biegewerkzeug-Transfershuttle (1) zum Verschieben von Biegewerkzeugen (11, 12) in einer Führungsschiene (6), umfassend:
- einen Grundkörper (2), und
- eine betätigbare Kupplung (4) zum Ankoppeln eines Biegewerkzeuges (11) an das Transfershuttle (1),
**dadurch gekennzeichnet, dass** das Transfershuttle (1) eine Halteeinrichtung (5) zum temporären Halten von zumindest einem Biegewerkzeug (12) in einer Führungsschiene (6) aufweist und dass die Kupplung (4) relativ zur Halteeinrichtung (5) im Wesentlichen parallel zur Verfahrrichtung (10) des Transfershuttles (1) bewegbar ist.

2. Biegewerkzeug-Transfershuttle nach Anspruch 1, **dadurch gekennzeichnet, dass** die Kupplung (4) relativ zum Grundkörper (2) im Wesentlichen parallel zur Verfahrrichtung (10) des Transfershuttles (1) zwischen einer eingefahrenen Position und einer ausgefahrenen Position bewegbar ist.

3. Biegewerkzeug-Transfershuttle nach Anspruch 2, **dadurch gekennzeichnet, dass** die Kupplung (4) in eine Richtung, vorzugsweise in Richtung der ausgefahrenen Position, vorgespannt ist.

4. Biegewerkzeug-Transfershuttle nach einem der vorhergehenden Ansprüche, **dadurch gekennzeichnet, dass** die Kupplung (4) durch eine im Transfershuttle (1) integrierte Antriebseinrichtung (13) in eine Verfahrrichtung (10) des Transfershuttles (1) bewegbar ist.

5. Biegewerkzeug-Transfershuttle nach einem der vorhergehenden Ansprüche, **dadurch gekennzeichnet, dass** die Kupplung (4) eine mechanische Kupplung ist und durch eine im Transfershuttle (1) integrierte erste Stelleinrichtung (14) zwischen einer Offen-Stellung und einer Schließ-Stellung betätigbar ist.

6. Biegewerkzeug-Transfershuttle nach Anspruch 4 und 5, **dadurch gekennzeichnet, dass** die Antriebseinrichtung (13) der Kupplung (4) einen ersten Antriebszylinder (7) umfasst und die Stelleinrichtung (14) der Kupplung (4) einen zweiten Antriebszylinder (8) umfasst, wobei der zweite Antriebszylinder (8) innerhalb des ersten Antriebszylinders (7) bewegbar gelagert ist.

7. Biegewerkzeug-Transfershuttle nach einem der vorhergehenden Ansprüche, **dadurch gekennzeichnet, dass** die Halteinrichtung (5) eine mechanische Halteeinrichtung ist und durch eine im Transfershuttle (1) integrierte zweite Stelleinrichtung (15) zwischen einer haltenden Stellung und einer freigebenden Stellung betätigbar ist, wobei vorzugsweise die Halteeinrichtung (5) ausgebildet ist, um ein Biegewerkzeug (12) gegen die Führungsschiene (6) zu drücken.

8. Biegewerkzeug-Transfershuttle nach einem der vorhergehenden Ansprüche, **dadurch gekennzeichnet, dass** die Halteinrichtung (5) zumindest ein Halteelement (25) mit einer Biegewerkzeugkontaktfläche (24) umfasst, wobei das Halteelement relativ zum Grundkörper (2) quer, vorzugsweise senkrecht zur Verfahrrichtung (10) des Transfershuttles (1) bewegbar ist.

9. Biegewerkzeug-Transfershuttle nach Anspruch 8, **dadurch gekennzeichnet, dass** die Biegewerkzeugkontaktfläche (24) des Halteelementes (25) aus nachgiebigem, insbesondere elastischem Material, vorzugsweise aus Gummi und/oder als Bürste, vorzugsweise aus Kunststoffborsten, gebildet ist.

10. Biegewerkzeug-Transfershuttle nach einem der vorhergehenden Ansprüche, **dadurch gekennzeichnet, dass** die Halteeinrichtung (5) in Verfahrrichtung (10) des Transfershuttles (1) über die Kupplung (4) hinausragt.

11. Biegewerkzeug-Transfershuttle nach einem der vorhergehenden Ansprüche, **dadurch gekennzeichnet, dass** die Kupplung (4) unabhängig von der Halteeinrichtung (5) bewegbar ist.

12. Biegewerkzeug-Transfershuttle nach einem der vorhergehenden Ansprüche, **dadurch gekennzeichnet, dass** die Kupplung (4) durch gegenüberliegende und aufeinander zu bewegbare Greifbacken (9) gebildet wird.

13. Biegewerkzeug-Transfershuttle nach Anspruch 12, **dadurch gekennzeichnet, dass** zumindest eine Greifbacke (9) an ihrer der gegenüberliegenden Greifbacke (9) zugewandten Seite stufenförmig ausgebildet ist.

14. Biegewerkzeug-Transfershuttle nach Anspruch 12 oder 13, **dadurch gekennzeichnet, dass** die Kupplung zumindest einen Adapter-Aufsatz (19) umfasst, der auf einem Greifbacken (9) aufgesetzt ist.

15. Biegewerkzeug-Transfershuttle nach einem der vorhergehenden Ansprüche, **dadurch gekennzeichnet, dass** das Transfershuttle (1) zumindest einen Energiespeicher (20, 30), insbesondere einen Druckspeicher, umfasst, der mit der Antriebseinrichtung (13) der Kupplung (4) und/oder der Stelleinrichtung (14) der Kupplung (4) und/oder der Stelleinrichtung (15) der Halteeinrichtung (5) verbunden ist, wobei vorzugsweise das Transfershuttle (1) zumindest eine mit dem Energiespeicher (20, 30) verbundene Energieversorgungsschnittstelle (21, 31) aufweist.

16. Biegewerkzeug-Transfershuttle nach einem der vorhergehenden Ansprüche, **dadurch gekennzeichnet, dass** das Transfershuttle (1) eine Steuereinrichtung (22) zur Betätigung der Kupplung (4) und der Halteeinrichtung (5) umfasst, wobei vorzugsweise die Steuereinrichtung (22) zum Empfangen von Steuerbefehlen mit einer Drahtlos-Schnittstelle (23) verbunden ist.

17. Biegepresse (26) und/oder Beschickungsvorrichtung (27) zum Beschicken einer Biegepresse (26) mit Biegewerkzeugen (11, 12) und/oder zum Auswechseln von einem oder mehreren in einer Biegepresse (26) eingesetzten Biegewerkzeugen (11, 12), umfassend zumindest eine als Führungsschiene ausgebildete Biegewerkzeughalterung (28), **gekennzeichnet durch** ein in der Führungsschiene verfahrbares Biegewerkzeug-Transfershuttle (1) nach einem der vorhergehenden Ansprüche.

18. Biegepresse und/oder Beschickungsvorrichtung nach Anspruch 17, **gekennzeichnet durch** eine Ladestation (29), die im Bereich einer Führungsschiene (6) angeordnet ist und zumindest eine an das Transfershuttle (1) ankoppelbare Energieversorgungsschnittstelle, insbesondere eine Druckluft-Schnittstelle und/oder eine elektrische und/oder induktive Schnittstelle, aufweist.

19. Verfahren zum Verschieben eines Biegewerkzeuges (11) entlang einer Führungsschiene (6) mit einem Biegewerkzeug-Transfershuttle (1) nach einem der Ansprüche 1 bis 16, umfassend die Schritte:
(a) Heranfahren des Transfershuttles (1) an zumindest ein Biegewerkzeug (11, 12),
(b) Ankoppeln eines Biegewerkzeuges (11) an das Transfershuttle (1) durch Betätigung der Kupplung (4),
(c) Betätigen der Halteeinrichtung (5) in die haltende Stellung,
(d) Bewegen der Kupplung (4) relativ zur Halteeinrichtung (5) im Wesentlichen parallel zur Verfahrrichtung (10) des Transfershuttles (1), während sich die Halteeinrichtung (5) in haltender Stellung befindet,
(e) vorzugsweise Betätigen der Halteeinrichtung (5) in die freigebende Stellung,
(f) Verfahren des Transfershuttles (1) mit einem angekoppelten Biegewerkzeug (11).

20. Verfahren nach Anspruch 19, **dadurch gekennzeichnet, dass**
- in Schritt (a) das Transfershuttle (1) an eine Reihe aus zumindest zwei in der Führungsschiene (6) hintereinander angeordneten Biegewerkzeugen (11, 12) herangefahren wird,
- in Schritt (b) ein erstes Biegewerkzeug (11) der Reihe an das Transfershuttle (1) angekoppelt wird,
- in Schritt (c) ein hinter dem ersten Biegewerkzeug (11) der Reihe befindliches Biegewerkzeug (12) durch die Halteeinrichtung (5) fixiert wird, und
- in Schritt (e) durch Bewegen der Kupplung (4) relativ zur Halteeinrichtung (5) das erste Biegewerkzeug (11) der Reihe von dem hinter dem ersten Biegewerkzeug (11) der Reihe befindlichen Biegewerkzeug (12) separiert wird.

## Claims

1. A bending tool transfer shuttle (1) for moving bending tools (11, 12) in a guide rail (6), comprising:
- a base body (2), and
- an operable coupling (4) for coupling a bending tool (11) to the transfer shuttle (1),
**characterized in that** the transfer shuttle (1) has a holding device (5) for temporarily holding at least one bending tool (12) in a guide rail (6) and the coupling (4) is movable substantially in parallel to the travel direction (10) of the transfer shuttle (1) relative to the holding device (5).

2. The bending tool transfer shuttle according to claim 1, **characterized in that** the coupling (4) is movable relative to the base body (2) substantially in parallel to the travel direction (10) of the transfer shuttle (1) between a retracted position and an extended position.

3. The bending tool transfer shuttle according to claim 2, **characterized in that** the coupling (4) is preloaded in a direction, preferably in the direction of the extended position.

4. The bending tool transfer shuttle according to one of the preceding claims, **characterized in that** the coupling (4) is movable in a travel direction (10) of the transfer shuttle (1) by means of a drive device (13) integrated in the transfer shuttle (1).

5. The bending tool transfer shuttle according to one of the preceding claims, **characterized in that** the coupling (4) is a mechanical coupling and can be operated between an open position and a closed position by a first actuator device (14) integrated in the transfer shuttle (1).

6. The bending tool transfer shuttle according to claims 4 and 5, **characterized in that** the drive device (13) of the coupling (4) comprises a first drive cylinder (7) and the actuator device (14) of the coupling (4) comprises a second drive cylinder (8), wherein the second drive cylinder (8) is movably mounted within the first drive cylinder (7).

7. The bending tool transfer shuttle according to one of the preceding claims, **characterized in that** the holding device (5) is a mechanical holding device and is operable between a holding position and a releasing position by means of a second actuator device (15) integrated in the transfer shuttle (1), wherein preferably the holding device (5) is adapted for pushing a bending tool (12) against the guide rail (6).

8. The bending tool transfer shuttle according to one of the preceding claims, **characterized in that** the holding device (5) comprises at least one holding element (25) with a bending tool contact surface (24), wherein the holding element is movable relative to the base body (2) transversely, preferably perpendicularly to the travel direction (10) of the transfer shuttle (1).

9. The bending tool transfer shuttle according to claim 8, **characterized in that** the bending tool contact surface (24) of the holding element (25) is formed of resilient, in particular elastic material, preferably of rubber and/or as a brush, preferably of plastic bristles.

10. The bending tool transfer shuttle according to one of the preceding claims, **characterized in that** the holding device (5) projects from the coupling (4) in the travel direction (10) of the transfer shuttle (1).

11. The bending tool transfer shuttle according to one of the preceding claims, **characterized in that** the coupling (4) is movable independently of the holding device (5).

12. The bending tool transfer shuttle according to one of the preceding claims, **characterized in that** the coupling (4) is formed by gripping jaws (9) that are opposite to one another and movable towards one another.

13. The bending tool transfer shuttle according to claim 12, **characterized in that** at least one gripping jaw (9) is designed to be stepped on its side facing the opposite gripping jaw (9).

14. The bending tool transfer shuttle according to claim 12 or 13, **characterized in that** the coupling comprises at least one adapter cap (19) placed on one of the gripping jaws (9).

15. The bending tool transfer shuttle according to one of the preceding claims, **characterized in that** the transfer shuttle (1) comprises at least one energy reservoir (20, 30), in particular a pressure reservoir, connected to the drive device (13) of the coupling (4) and/or to the actuator device (14) of the coupling (4) and/or to the actuator device (15) of the holding device (5), wherein preferably, the transfer shuttle (1) comprises at least one energy supply interface (21, 31) connected to the energy reservoir (20, 30).

16. The bending tool transfer shuttle according to one of the preceding claims, **characterized in that** the transfer shuttle (1) comprises a controller (22) for operating the coupling (4) and the holding device (5), wherein preferably, the controller (22) is connected to a wireless interface (23) for receiving control commands.

17. A bending press (26) and/or loading device (27) for loading a bending press (26) with bending tools (11, 12) and/or for interchanging one or several bending tools (11, 12) inserted in a bending press (26), comprising at least one bending tool holder (28) designed as a guide rail, **characterized by** a bending tool transfer shuttle (1) according to one of the preceding claims displaceable in the guide rail.

18. The bending press and/or loading device according to claim 17, **characterized by** a charging station (29) arranged in the region of a guide rail (6) and comprising at least one energy supply interface that can be coupled to the transfer shuttle (1), in particular a compressed air interface and/or an electrical and/or inductive interface.

19. A method for moving a bending tool (11) along a guide rail (6) by means of a bending tool transfer shuttle (1) according to one of claims 1 to 16, comprising the following steps:
(a) moving the transfer shuttle (1) towards at least one bending tool (11, 12),
(b) coupling a bending tool (11) to the transfer shuttle (1) by operating the coupling (4),
(c) operating the holding device (5) into the holding position,
(d) moving the coupling (4) relative to the holding device (5) substantially in parallel to the travel direction (10) of the transfer shuttle (1), while the holding device (5) is in the holding position,
(e) preferably operating the holding device (5) into the releasing position,
(f) displacing the transfer shuttle (1) with a coupled bending tool (11).

20. The method according to claim 19, **characterized in that**
- in step (a), the transfer shuttle (1) is moved towards a row of at least two bending tools (11, 12) arranged behind one another in the guide rail (6),
- in step (b), a first bending tool (11) from the row is coupled to the transfer shuttle (1),
- in step (c), a bending tool (12) located behind the first bending tool (11) of the row is fixed by means of the holding device (5), and
- in step (e), the first bending tool (11) of the row is separated from the bending tool (12) located behind the first bending tool (11) of the row by moving the coupling (4) relative to the holding device (5).

## Revendications

1. Navette de transfert d'outils de pliage (1) destinée au déplacement d'outils de pliage (11, 12) dans un rail de guidage (6), comprenant :
- un corps de base (2), et
- un élément d'accouplement (4) actionnable destiné à l'accouplement d'un outil de pliage (11) avec la navette de transfert (1),
**caractérisée en ce que** la navette de transfert (1) comporte un dispositif de retenue (5) destiné à retenir temporairement au moins un outil de pliage (12) dans un rail de guidage (6), et **en ce que** l'élément d'accouplement (4) est mobile par rapport au dispositif de retenue (5) essentiellement parallèlement à la direction de déplacement (10) de la navette de transfert (1).

2. Navette de transfert d'outils de pliage selon la revendication 1, **caractérisée en ce que** l'élément d'accouplement (4) est mobile par rapport au corps de base (2) essentiellement parallèlement à la direction de déplacement (10) de la navette de transfert (1) entre une position rentrée et une position sortie.

3. Navette de transfert d'outils de pliage selon la revendication 2, **caractérisée en ce que** l'élément d'accouplement (4) est pré-tendu dans une direction, de préférence dans la direction de la position sortie.

4. Navette de transfert d'outils de pliage selon l'une des revendications précédentes, **caractérisée en ce que** l'élément d'accouplement (4) est mobile dans une direction de déplacement (10) de la navette de transfert (1) sous l'action d'un dispositif d'entraînement (13) intégré dans la navette de transfert (1).

5. Navette de transfert d'outils de pliage selon l'une des revendications précédentes, **caractérisée en ce que** l'élément d'accouplement (4) est un élément d'accouplement mécanique et peut être actionné entre une position d'ouverture et une position de fermeture par un premier dispositif de réglage (14) intégré dans la navette de transfert (1).

6. Navette de transfert d'outils de pliage selon les revendications 4 et 5, **caractérisée en ce que** le dispositif d'entraînement (13) de l'élément d'accouplement (4) comprend un premier cylindre d'entraînement (7), et le dispositif de réglage (14) de l'élément d'accouplement (4) comprend un deuxième cylindre d'entraînement (8), le deuxième cylindre d'entraînement (8) étant supporté de façon mobile à l'intérieur du premier cylindre d'entraînement (7).

7. Navette de transfert d'outils de pliage selon l'une des revendications précédentes, **caractérisée en ce que** le dispositif de retenue (5) est un dispositif de retenue mécanique et peut être actionné entre une position de retenue et une position de libération par un deuxième dispositif de réglage (15) intégré dans la navette de transfert (1), le dispositif de retenue (5) étant de préférence constitué pour presser un outil de pliage (12) contre le rail de guidage (6).

8. Navette de transfert d'outils de pliage selon l'une des revendications précédentes, **caractérisée en ce que** le dispositif de retenue (5) comprend au moins un élément de retenue (25) avec une surface de contact d'outils de pliage (24), l'élément de retenue étant mobile par rapport au corps de base (2) transversalement, de préférence perpendiculairement, à la direction de déplacement (10) de la navette de transfert (1).

9. Navette de transfert d'outils de pliage selon la revendication 8, **caractérisée en ce que** la surface de contact d'outils de pliage (24) de l'élément de retenue (25) est formée d'un matériau flexible, en particulier élastique, de préférence en caoutchouc et/ou sous forme de brosse, de préférence de brosses en matière plastique.

10. Navette de transfert d'outils de pliage selon l'une des revendications précédentes, **caractérisée en ce que** le dispositif de retenue (5) dépasse de l'élément d'accouplement (4) dans la direction de déplacement (10) de la navette de transfert (1).

11. Navette de transfert d'outils de pliage selon l'une des revendications précédentes, **caractérisée en ce que** l'élément d'accouplement (4) est mobile indépendamment du dispositif de retenue (5).

12. Navette de transfert d'outils de pliage selon l'une des revendications précédentes, **caractérisée en ce que** l'élément d'accouplement (4) est formé de mâchoires (9) opposées et mobiles l'une vers l'autre.

13. Navette de transfert d'outils de pliage selon la revendication 12, **caractérisée en ce qu'**au moins une mâchoire (9) est constituée de façon étagée sur son côté tourné vers la mâchoire (9) opposée.

14. Navette de transfert d'outils de pliage selon la revendication 12 ou 13, **caractérisée en ce que** l'élément d'accouplement comprend au moins un capuchon adaptateur (19) qui est posé sur une mâchoire (9).

15. Navette de transfert d'outils de pliage selon l'une des revendications précédentes, **caractérisée en ce que** la navette de transfert (1) comprend au moins un accumulateur d'énergie (20, 30), en particulier un accumulateur de pression, qui est raccordé au dispositif d'entraînement (13) de l'élément d'accouplement (4) et/ou au dispositif de réglage (14) de l'élément d'accouplement (4) et/ou au dispositif de réglage (15) du dispositif de retenue (5), la navette de transfert (1) comportant de préférence au moins une interface d'alimentation en énergie (21, 31) raccordée à l'accumulateur d'énergie (20, 30).

16. Navette de transfert d'outils de pliage selon l'une des revendications précédentes, **caractérisée en ce que** la navette de transfert (1) comprend un dispositif de commande (22) destiné à l'actionnement de l'élément d'accouplement (4) et du dispositif de retenue (5), le dispositif de commande (22) étant de préférence raccordé à une interface sans fil (23) pour la réception d'instructions de commande.

17. Presse de pliage (26) et/ou dispositif de chargement (27) destiné(e) au chargement d'une presse de pliage (26) avec des outils de pliage (11, 12) et/ou au remplacement d'un ou de plusieurs outils de pliage (11, 12) introduits dans une presse de pliage (26), comprenant au moins un support d'outils de pliage (28) constitué en tant que rail de guidage, caractérisé(e) par une navette de transfert (1) d'outils de pliage déplaçable dans le rail de guidage selon l'une des revendications précédentes.

18. Presse de pliage et/ou dispositif de chargement selon la revendication 17, caractérisé(e) par un poste de chargement (29) qui est disposé dans la zone d'un rail de guidage (6) et comporte au moins une interface d'alimentation en énergie pouvant être accouplée avec la navette de transfert (1), en particulier une interface d'air comprimé et/ou une interface électrique et/ou inductive.

19. Procédé destiné au déplacement d'un outil de pliage (11) le long d'un rail de guidage (6) avec une navette de transfert d'outils de pliage (1) selon l'une des revendications 1 à 16, comprenant les étapes :
(a) rapprochement de la navette de transfert (1) en direction d'au moins un outil de pliage (11, 12),
(b) accouplement d'un outil de pliage (11) avec la navette de transfert (1) par l'actionnement de l'élément d'accouplement (4),
(c) actionnement du dispositif de retenue (5) vers la position de retenue,
(d) déplacement de l'élément d'accouplement (4) par rapport au dispositif de retenue (5) essentiellement parallèlement à la direction de déplacement (10) de la navette de transfert (1) pendant que le dispositif de retenue (5) se trouve dans la position de retenue,
(e) de préférence actionnement du dispositif de retenue (5) vers la position de libération,
(f) déplacement de la navette de transfert (1) avec un outil de pliage (11) accouplé.

20. Procédé selon la revendication 19, **caractérisé en ce que**
- dans l'étape (a), la navette de transfert (1) est rapprochée d'une rangée d'au moins deux outils de pliage (11, 12) disposés l'un derrière l'autre dans le rail de guidage (6),
- dans l'étape (b), un premier outil de pliage (11) de la rangée est accouplé avec la navette de transfert (1),
- dans l'étape (c), un outil de pliage (12) situé derrière le premier outil de pliage (11) de la rangée est fixé par le dispositif de retenue (5), et
- dans l'étape (e), le premier outil de pliage (11) de la rangée est séparé de l'outil de pliage (12) situé derrière le premier outil de pliage (11) par le déplacement de l'élément d'accouplement (4) par rapport au dispositif de retenue (5).
